# EUROPEAN PATENT SPECIFICATION

(11) **EP 3 054 763 B1**
(45) Date of publication and mention of the grant of the patent: **05.04.2017**
(21) Application number: 14781855.3
(22) Date of filing: 06.10.2014
(51) Int. Cl.: A01G 25/02, B21D 28/28

(54) **DEVICE AND METHOD FOR DRILLING AN IRRIGATION PIPE AT DRIPPER LOCATION**
VORRICHTUNG UND VERFAHREN ZUM BOHREN EINER BEWÄSSERUNGSLEITUNG AN EINER TROPFERSTELLE
DISPOSITIF ET PROCÉDÉ POUR PERFORER UN TUYAU D'IRRIGATION EN À L'EMPLACEMENT D'UN GOUTTEUR

(30) Priority: 10.10.2013 CH 17322013
(43) Date of publication of application: 17.08.2016
(73) Proprietor: Maillefer S.A., 1024 Ecublens (CH)
(72) Inventor: KURTH, Florian, CH-1400 Cheseaux-Noréaz (CH); DONZÉ, Axel, CH-1148 L'Isle (CH)
(74) Representative: P&TS SA (AG, Ltd.)
(86) International application number: PCT/EP2014/071295
(87) International publication number: WO 2015/052111

(56) References cited:
- EP-A1- 2 189 057
- CN-U- 201 997 600
- US-A- 5 744 779

## Description

### Field of the invention

The present invention concerns a method for manufacturing an irrigation pipe, in particular a drip irrigation pipe, and a system for manufacturing this irrigation pipe. More precisely, the present invention concerns also a dripper detection method and a device for detecting a dripper, as well as a pipe drilling method and a device for drilling a pipe at a dripper location.

### Description of related art

Some irrigation techniques use so-called "drip" irrigation pipes or hoses. The expression "drip irrigation pipe" indicates in this context an irrigation pipe, e.g. made of polymeric material, pierced at pre-determined intervals by holes of small diameter, through which water can flow towards the ground. A dripper or drip element, which is a flow limiter, can be provided at each hole for precisely controlling the flow from the holes. It is generally made of plastic material and it is attached to the inner wall of the irrigation pipe during its manufacturing. Such a dripper comprises a watertight wall which defines with the internal face of the pipe a collecting chamber connected to the interior space the pipe by a regulated discharge conduit.

Since irrigation pipes have a fixed cross-sectional profile, an extrusion process is generally used for their manufacturing. A system for manufacturing irrigation pipes generally comprises an extrusion unit, a calibrator unit for regulating the diameter of the pipes, a cooling unit for cooling the pipe - comprising a liquid cooling tank which is some tens meters long and a cooling liquid, e.g. water, inside the tank - and a traction unit for drawing the pipe through the liquid cooling tank. The speed of the irrigation pipe inside the liquid cooling tank is generally higher than 100 m/min, e.g. 150 m/min.

The drippers are regularly fed into the extrusion unit and then into the irrigation pipe by an ejection unit or dripper insertion unit comprising orienting means for feeding the drippers to the extrusion unit along a determined orientation.

A perforating unit is provided for drilling the irrigation pipe at appropriate locations in correspondence of each dripper to make the dripper functional.

A detection unit is associated with the perforation unit to locate precisely the position of each dripper and identify all drilling points along the pipe.

Several detection and drilling systems have been proposed but they are not technically reliable anymore according to more drastic irrigation pipe manufacture specifications, notably with a higher manufacture cadence, such as 1800 to 2000 drippers to be detected per minute, which implies 1800 to 2000 holes to be drilled per minute.

The most common detection method for the dripper consists of a mechanical arm acting on an electrical contact, such as in Figure 1 of CN 1023900061. A mechanical detection system detects the passage of the dripper element due to deformation of the tube. Based on the line speed, the motion of the drilling unit is calculated such that the hole is drilled at the desired part of the dripper.

The same figure also shows the drilling unit in a well known execution where the drill motor is mounted on eccentric cranks, making a plunging and translational movement according to the speed of the pipe moving along.

Such systems are well established and work well for detection and drilling rates up to 800 drippers/min, if carefully designed. At higher rates, inertia effects become so strong that these mechanical detection and drilling systems become unsuitable for the purpose. The reason is that the angular velocity of the eccentric of the drilling unit is continuously accelerating and decelerating during a rotation cycle, making up for significant vibrations with all the mass in movement. More generally, known mechanical detection and drilling systems are not able to work reliably for high rates.

More recent systems such as in US 5 744 779 uses capacitive detectors, taking advantage of variation in dielectric constant, in combination with laser drilling unit. While the laser beam used for drilling is virtually inertia-free and can therefore drill holes at any practical rate, it is expensive and maintenance-intensive. On the other hand, the dripper detection based on capacitance measurement is not suitable for high detection Other systems are known from e.g. EP 2 189 057 A1 and CN 201 997 600 U.

It is an aim of the present invention to obviate or mitigate one or more of the aforementioned disadvantages.

The aim of the present invention is to provide a dripper detection method and device, a pipe drilling method and device, also with a irrigation pipe drilling system which allow a high rate for dripper detection and pipe drilling in an irrigation pipe manufacturing system, in particular for a rate of 800 drippers per minute and more.

### Brief summary of the invention

According to the invention, these aims are achieved by means of a pipe drilling device according to claim 1, by means of an irrigation pipe drilling system according to claim 10 and by means of a method for drilling an irrigation pipe according to claim 13.

The dripper detection device and the pipe drilling device according to the invention is used for an irrigation pipe manufacturing system comprising a continuous pipe feeder capable of making a pipe equipped with drippers having a water outlet, said pipe circulating along a predetermined circulation direction (X-X') while keeping the drippers' water outlet in a predetermined orientation. In most cases, the drippers are in such a position within the pipe in the pipe feeder that the water outlet is preferably upwardly oriented, which means said predetermined orientation of the water outlet is vertical and forming a Z-Z' axis. The invention is not limited to flat, generally rectangular drippers (in which case the drippers are preferably upwardly oriented), but also applies for tubular or annular, i.e. ring-shaped, drippers.

Said dripper detection device includes a laser detection unit with a laser source emitting a laser beam directed to the pipe outer face location where drippers are present at regular intervals, and a laser signal receiver which receives and analyses the laser beam reflected on the pipe outer face to provide a transformed reflected signal which contain information about the passage of each dripper facing said laser detection unit.

Such a laser based dripper detection device allows a very reliable dripper detection since it can detect quite instantaneously very low change in the pipe profile of the pipe passing in front of the laser detection unit, without contact with the pipe and therefore without interfering with the pipe running at high speed. Also a laser based dripper detection device is an optical detection means which does not vibrate whereas a lot of known dripper detection devices are mechanically working and are inherently subject to vibrations when working at high speed. This situation allows to make the dripper detection possible for high or very high dripper rate per minute, namely more than 800 drippers detected per minute until 2000 drippers detected per minute or even more.

Said pipe drilling device includes a rotary drilling unit which rotates around an axis of rotation (for instance Y-Y') which is orthogonal to said pipe circulation direction (for instance X-X') and to said dripper orientation (for instance Z-Z'), said rotary drilling unit being equipped with at least one drilling tool and being distant from the pipe so that said drilling tool is able to drill a hole in the pipe wall at a location of a dripper when the angular position of the drilling tool corresponds to the closest position from the pipe, which drilling position is a contact position between the pipe wall and the end of the drilling tool.

Such a rotary based pipe drilling device allows a very efficient drilling operation since there is no need for a forward piercing stroke followed by a backward stroke before implementing a new forward piercing stroke which alternating motion implies vibrations. Advantageously, for limiting and avoiding any out-of-balance of the rotating parts, the mass is distributed so as to be centred on the axis of rotation of the rotary drilling unit. Also, such a rotary based pipe drilling device allows a high precision in the drilling tool height since the rotational motion belongs to a circular path having a constant radius which can be chosen, set and then kept unchanged for a whole continuous manufacture period. In summary, the masses are concentrated nearest to the rotation axis, which minimizes inertia effects, and there are no need for reciprocating masses, which avoids vibrations.

In a preferred embodiment the rotary drilling unit rotates around said rotation axis (for instance Y-Y') according to a unique rotation direction. The rotary drilling unit rotary motion has a variable rotation speed in order to be adapted to the velocity of the tube during the drilling phase and to the spacing of the drippers and the velocity of the tube in-between two drilling phases. As an alternative, said rotary drilling unit is rotating around said rotation axis Y,Y' according to a motion alternatively clockwise and anti-clockwise, in which the direction of rotation changes after the drilling of each hole in the pipe.

Such an alternating rotary motion is as a pendulum movement and allows a shorter time between two successive passages of the drilling tool in the drilling position of the drilling tool, which corresponds to the closest position of the drilling tool with respect to the pipe, which is a position with contact, notably a downward drilling position of the drilling or piercing tool.

In a preferred embodiment, the rotation speed of the rotary drilling unit around said axis of rotation (for instance Y-Y') is decelerating before each change of rotation direction and accelerating after each change of rotation direction. By having such changes in the rotation speed of the rotary drilling unit, it is possible to adapt the rhythm rotation motion to the exact required drilling moment, i.e. when the drilling location of the pipe faces the rotary drilling unit in the drilling position of the drilling tool.

In another preferred embodiment, said rotary drilling unit is further equipped with a stop element against which said pipe comes into contact in order to limit the drilling depth of the drilling tool. Such provision secure the drilling depth of the drilling tool, avoiding any too deep drilling that can damage the dripper by a drilling not only making a hole through the pipe wall but also damaging the wall of the dripper.

According to another aspect, the invention concerns an irrigation pipe drilling system comprising a pipe drilling device with a rotary drilling unit as previously or hereinafter mentioned and a dripper detection device placed upstream said pipe drilling device and comprising any detection means able to detect each dripper location so that said pipe drilling device is able to drill a hole on the pipe wall at a predetermined location corresponding to the water outlet of said dripper.

In a preferred embodiment, said dripper detection device includes a laser detection unit with a laser source emitting a laser beam directed to the pipe outer face location where drippers are present at regular intervals, and a laser signal receiver which receives and analyses the laser beam reflected on the pipe outer face to provide a transformed reflected signal which contains information about the passage of each dripper facing said laser detection unit.

Advantageously, said dripper detection device further includes a stabilizing unit placed upstream and/or downstream of the laser detection unit for having a determined and constant angular orientation and a determined and constant distance from said laser detection unit of the pipe section facing said laser detection unit. The higher the precision of the angular orientation of the pipe section facing said laser detection unit and the higher the precision the distance from said laser detection unit of the pipe section facing said laser detection unit, the lower is the risk of drilling out of the collecting chamber of the dripper, i.e. in another part of the dripper or in a portion of the pipe without any dripper.

According to another aspect, the invention concerns an irrigation pipe drilling system comprising a laser based dripper detection device as previously or hereinafter mentioned and a pipe drilling device placed downwards said dripper detection device and comprising any drilling means able to drill a hole on the pipe wall for each dripper at a predetermined location corresponding precisely to the water outlet of said dripper. The water outlet is connected to the collecting chamber of the dripper so that the allowance for the drilling location in the pipe wall depends on the size of said collecting chamber.

In a preferred embodiment, said pipe drilling device is able to use said transformed reflected signal to control the drilling location of said holes along said pipe.

In a preferred embodiment, said pipe drilling device includes a rotary drilling unit which rotates around an axis of rotation (for instance Y-Y') which is orthogonal to said pipe circulation direction (for instance X-X') and to said dripper orientation (for instance Z-Z'), said rotary drilling unit being equipped with at least one drilling tool and being distant from the pipe so that said drilling tool is able to drill a hole in the pipe wall at a location of a dripper when the angular position of the drilling tool corresponds to the closest position from the pipe.

In a preferred embodiment, said rotary drilling unit includes a double-head spindle whose two ends are equipped with one drilling tool.

In another preferred embodiment, said rotary drilling unit is further equipped with a stop element against which said pipe comes into contact in order to limit the drilling depth of the drilling tool.

According to another aspect, the invention concerns a method for detecting a dripper position along an irrigation pipe continuously running along an irrigation pipe manufacturing system, comprising:
- keeping said irrigation pipe circulating along a predetermined circulation direction (for instance X-X') while keeping the drippers' water outlet in a predetermined dripper orientation (for instance Z-Z'),
- emitting a laser beam directed to the pipe outer face location where drippers are present at regular intervals,
- receiving and analysing the laser beam reflected on the pipe outer face to provide a transformed reflected signal which contain information about the passage of each dripper facing said laser detection unit.

In a preferred embodiment, said detection method further comprises stabilizing said pipe for having a determined and constant angular orientation and a determined and constant distance from said laser detection unit of the pipe section facing said laser detection unit.

In a preferred embodiment, said detection method further comprises deforming said pipe at least at dripper location before it arrives to said laser detection unit. Such a temporary deformation can help the dripper detection by enhancing the local outer face relief of the pipe wall created by the dripper's presence, namely the protrusion or embossment and/or depression or hollow formed in the outer face of the pipe wall, also concave and/or convex outer face portions. This situation is particularly helpful for pipe having thick walls, namely equal to or above 0.20 mm thickness walls and for which the presence of the dripper is not or not much naturally visible. This provision can nevertheless being applied for pipe with less thick wall, i.e. with a wall having a thickness below 0.20 mm.

In a preferred embodiment of said method for drilling an irrigation pipe at dripper locations, the detection of the drippers is performed according to a method for detecting a dripper as previously or hereinafter mentioned.

According to another aspect, the invention concerns a method for drilling an irrigation pipe equipped with drippers having a water outlet, said pipe continuously running along an irrigation pipe manufacturing system, comprising
- keeping said irrigation pipe circulating along a predetermined circulation direction (for instance X-X') while keeping the drippers' water outlet in a predetermined dripper orientation (for instance Z-Z'),
- providing a rotary drilling unit equipped with at least one drilling tool, and being distant from the pipe so that said drilling tool is able to drill a hole in the pipe wall at a location of a dripper when the angular position of the drilling tool corresponds to the closest position from the pipe,
- making said rotary drilling unit to rotate around an axis of rotation (for instance Y-Y') which is orthogonal to said circulation direction (for instance X-X') and to said dripper orientation (for instance Z-Z'),
- drilling holes in the pipe wall at each location of a dripper when the angular position of the drilling tool is the closest from the pipe.

In a preferred embodiment of said method for drilling an irrigation pipe at dripper locations, said rotary drilling unit further includes a double-head spindle whose two ends are equipped with one drillings tool and wherein said drilling step is implemented by using alternatively each of said two drilling tools.

In a preferred embodiment of said method for drilling an irrigation pipe at dripper locations, said drilling step is implemented with said rotary drilling unit rotating around said rotation axis (for instance Y,Y') according to a unique rotation direction. As an alternative, said drilling step is implemented with said rotary drilling unit rotating around said rotation axis (for instance Y,Y') according to a motion alternatively clockwise and anti-clockwise, in which the direction of rotation changes after the drilling of each hole in the pipe.

### Brief Description of the Drawings

The invention will be better understood with the aid of the description of an embodiment given by way of example and illustrated by the figures, in which:
Fig. 1 shows one embodiment of the irrigation pipe drilling system according to the invention containing the dripper detection device and the pipe drilling device according to the invention.
Fig. 2 shows a upper view of a section of an irrigation pipe with a hole drilled according to the method for drilling an irrigation pipe according to the invention, and with a dripper.
Fig.3 shows an exploded view of a possible embodiment for the rotary drilling unit.
Fig. 4 shows a lateral view of the rotary drilling unit of Fig. 3.

### Detailed Description of possible embodiments of the Invention

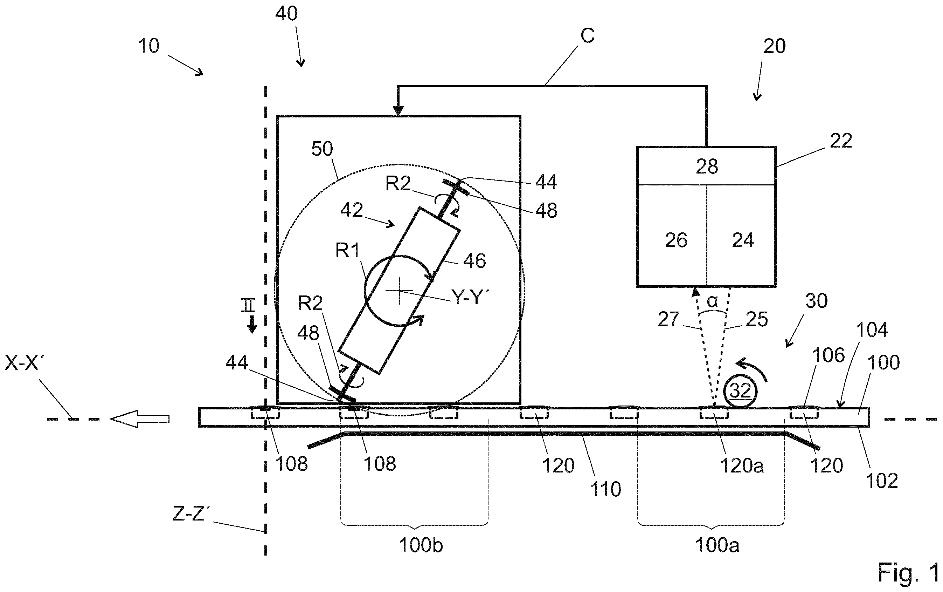

The irrigation pipe drilling system 10 schematically shown in Fig. 1 comprises a dripper detection device 20 (on the right) and a pipe drilling device 40 (on the left). This irrigation pipe drilling system 10 is placed facing an irrigation pipe 100 running along a path whose portion facing irrigation pipe drilling system 10 is represented in a non-limitative way as being horizontal and linear, parallel to a circulation direction shown here identical to an axis X-X'. This irrigation pipe 100 is supported by a support element 110.

The irrigation pipe 100 contains drippers 120 placed inside said irrigation pipe 100 while being fixed to the inner face of the pipe wall 102. As shown in Fig. 1, preferably, drippers 120 are placed inside said irrigation pipe 100 at regular and constant intervals in the running portion of the pipe. In some cases, the drippers 120 are placed inside said irrigation pipe 100 at regular but not constant intervals in the running portion of the pipe: for instance with successively a first segment of pipe having drippers at constant intervals and, following the first segment, a second segment of pipe without drippers. Usually, during the manufacture of the irrigation pipe 100, there is no dripper in the first manufactured section and the last manufactured section. In the shown embodiment, the drippers 120 are placed at the upper part of the irrigation pipe100, i.e. the drippers 120 are upwardly oriented.

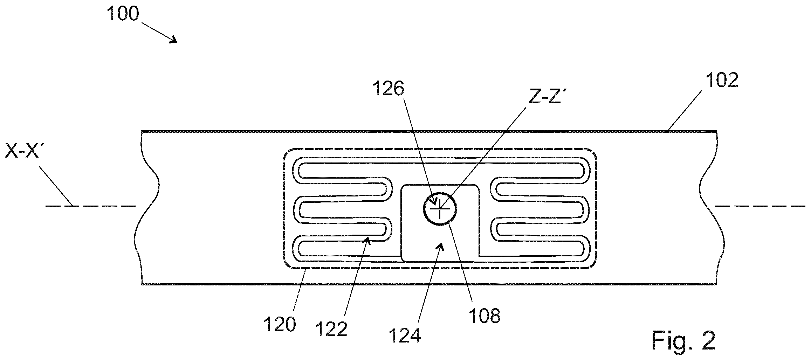

More precisely, as shown in Fig. 2, the drippers 120 are placed so that the labyrinth 122 and the collecting chamber 124 are also upwardly oriented and delimited by walls of the drippers 100 and by top portion of the pipe wall 102.

As can be seen in Fig.1, the presence of the drippers 120 creates a natural local deformation 106 of the pipe wall 102, here a visible protrusion of the outer face 104. This local deformation 106 may or may not be naturally visible at the outer face 104 of the pipe wall 102, depending mainly of the thickness of this pipe wall 102.

According to the invention, the dripper detection device 20 is a laser based detection device, comprising a laser detection unit 22 facing a pipe section 100a and provided with :
- a laser source 24 emitting a laser beam 25 directed to the pipe outer face 104 location where drippers 120 are present at regular intervals, (in Fig.1, the laser beam 25 is directed towards the pipe outer face 104 at the location of a dripper 120a currently detected), and
- a laser signal receiver 26 which receives and analyses the laser beam reflected 27 on the pipe outer face 104 to provide a transformed reflected signal which contain information about the passage of each dripper 120 facing said laser detection unit 22.

This way, a change in the reflected beam 27 received by said laser signal receiver 26 indicates the appearance or the disappearance of a dripper 120 at the contact location of the emitted laser beam 25 on the pipe outer face 104, thereby creating a reception signal dependent from the presence and the absence of a dripper 120 at said contact location, namely the presence and the absence of a natural local deformation 106 of the pipe wall 102. For instance, the distance between the laser source 24 and the pipe outer face 104 is continuously measured at said contact location by laser triangulation according to the well-known method which uses the triangulation alpha (α) angle formed between the emitted laser beam 25 and the reflected laser beam 27.

This reception signal is then decoded and transformed by the laser signal receiver 26 to provide said transformed reflected signal which contains information about the passage of the dripper 120a facing said laser detection unit 22. This information is preferably a time based information, for instance an elapsed time since a reference time, and/or a location based information, for instance a pipe length already seen by the laser detection unit 22 or a distance covered by the irrigation pipe 100 from a reference position on the irrigation pipe 100, and is related to the passage of each dripper 120 detected by said laser detection unit 22.

Preferably, said dripper detection device 20 further includes a stabilizing unit 30 placed upstream or downstream or both upstream and downstream of the laser detection unit 22 for having a determined and constant angular orientation and a determined and constant distance from said laser detection unit 22 of the irrigation pipe 100a section facing said laser detection unit 22. Stabilization of the irrigation pipe 100a section facing said laser detection unit 22 is important for the laser detection to be accurate and therefore reliable for later correct drilling of the irrigation pipe 100.

According to a first variant said stabilizing unit 30 is placed upstream of the laser detection unit 20 and is also able to slightly deform the irrigation pipe 100 at least at dripper locations before it arrives to said laser detection unit 20. This deformation 106 of the pipe wall 102 is a temporary deformation which is performed or not, depending notably on the pipe wall thickness, in the pipe wall material, and on the amount of pressure applied by the stabilizing unit 30.

In the embodiment shown on figure 1, said stabilizing unit 30 is placed upstream of the laser detection unit 22 and comprises a roller 32 pressing with a predetermined force on the pipe outer face 104 at a radial location of the pipe 100 where drippers 120 are present at regular intervals. This roller 32 stabilizes in all cases the position of the irrigation pipe 100 to be drilled before implementation of the dripper detection, and in some cases this roller also carries out a deformation 106 of the upper portion of the pipe wall 102 downstream and then upstream of each dripper 120. This roller 32 can be used as only or in addition to other stabilizing and/or deforming element

In a not shown embodiment, said stabilizing unit is placed upstream of the laser detection unit 20 and comprises a pipe-bending passage in which said pipe circulates. Such a pipe-bending passage can have different shape, notably an undulating shape with up and down bends that can be created by bending the pipe in one or several winding sections. This pipe-bending passage can be used as only or in addition to other stabilizing and/or deforming element.

In another not shown embodiment, said stabilizing unit 20 comprises a funnel placed upstream and/or downstream of the laser detection unit 22 and in which said pipe 100 circulates. Such a funnel is another way for stabilizing the pipe and can be used as only or in addition to other stabilizing element.

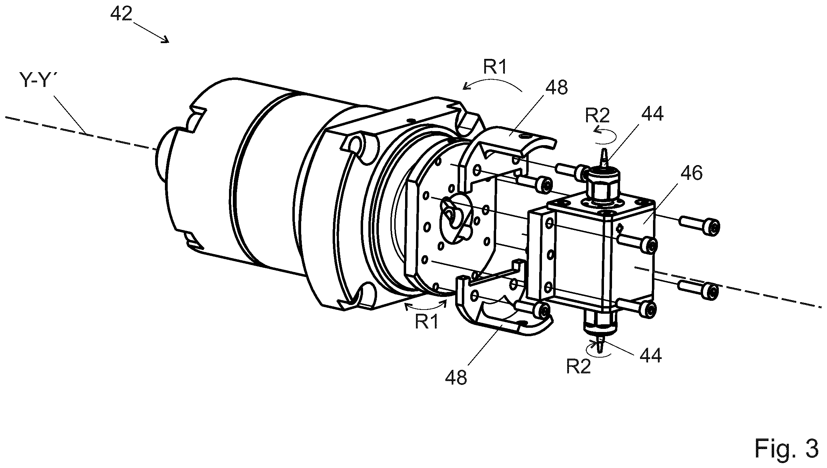

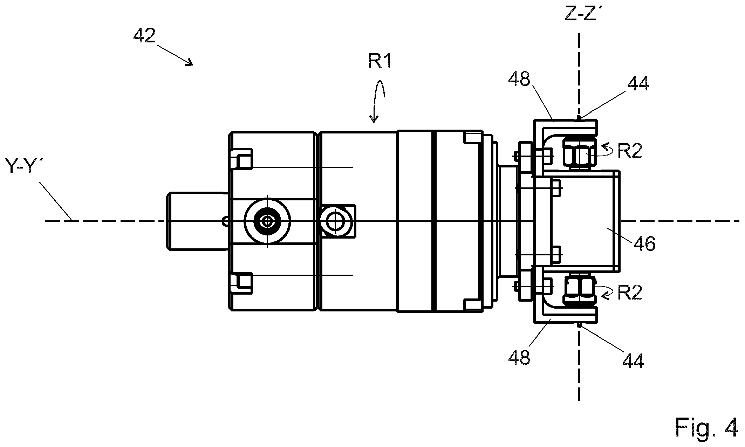

Preferably, as shown in Fig. 1, the dripper detection device 20 further comprises a drilling control unit 28 that is able to use said information of the transformed reflected signal to control the drilling sequence of a pipe drilling device 40. For instance, said drilling control unit 28 is able to use said transformed reflected signal as a drilling control signal containing a drilling top signal which activates the drilling operation/ drilling motion of the drilling tool 44, and particularly adapts the rotation velocity of the rotary drilling unit. Preferably, the drilling tools 44 are each drilling the pipe wall 102 during two separate but successive drilling phases, by rotating in the same direction (shown as being anticlockwise in Fig. 1, 3 and 4) when looking at the end of the drilling tools 44, which correspond to different rotation directions when looking at the whole rotary drilling unit 42 (from the point of view shown on Fig. 3 and 4)

Such a pipe drilling device 40 is placed downstream said dripper detection device 20 and comprises a rotary drilling unit 42 which rotates around an horizontal axis of rotation Y-Y' which is orthogonal to said horizontal circulation direction X-X' of the irrigation pipe and to the vertical dripper orientation Z-Z' (see arrow R1 on Fig. 1). Said rotary drilling unit 42 is equipped with two drilling tools 44 placed in a diametrically opposite configuration, at the same distance from said axis of rotation Y-Y' of the rotary drilling unit 42. Also, said rotary drilling unit 42 is placed at a distance from the pipe 100 so that said drilling tools are both able to drill a hole 108 in the pipe wall 102 at a location of a dripper 120 when the angular position of the drilling tool around said axis of rotation Y-Y' corresponds to the closest position from the pipe 100. In this closest position, the end of the drilling tool 44 contacts and penetrate the pipe wall 102 at a pipe section 100b facing said rotary drilling unit 42, to pierce this pipe wall 102, while not piercing the dripper wall. More precisely, as can be seen from Fig. 2 the hole 108 is drilled at a location of the pipe wall 102 forming a water outlet 126 for the dripper 120 by being placed facing the collecting chamber 124 of the dripper, thereby allowing the water flow to escape from the pipe 100.The pipe 100 being supported by the support element 110 downwards the rotary drilling unit 42, the vertical distance between the rotary drilling unit 42 and the pipe 100 is adjusted by the control of the vertical distance between the rotary drilling unit 42 and the support element 110. Preferably, beforehand the drilling operation, the height of the drilling unit 42 is adjusted and is kept unchanged during the whole drilling operation. Beforehand the drilling operation, the height of the support element 110 is adjusted and during drilling operation, the vertical position of the support element 110 is changed from a lower rest position to a higher working position in which the drilling can be performed accurately.

In the illustrated embodiment, said drilling tool 44 is a drill bit further performing a rotating motion around its own longitudinal axis (see arrows R2 on Fig. 1). A preferred shape for the drill bit end correspond to a bevelled end with an outline having an elliptical or a spoon shape. Also the drill-bit can have a hollow configuration at its end such as a trepan in order to have an easy cutting and discharge of the cut portion of the pipe wall 102.

According to a not-shown embodiment, said drilling tool is a punch die elastically pushed towards said pipe wall when the rotative drilling unit 22 arrives at a radial position turned towards said pipe 100. In addition to rotation around said rotation axis Y-Y', such a drilling tool implements also a forward stroke when facing the dripper location so that in the lowest position of the punch the pipe wall 102 is drilled, and a subsequent reverse stroke that intervene later at an higher position of the punch. This higher position of the punch can either be a slightly higher position, being still a contact position with the pipe wall 102, or a significant higher position, being not a contact position with the pipe wall 102. This situation corresponds to an up and down movement, and more generally to a forward and backward stroke, of the drilling tool 44 which is combined with the rotary motion of the drilling unit 42. This punch die also rotates around its own longitudinal direction as conventional drill-bits, combining therefore a plunging motion and a rotating motion of the drilling tool(s) 44. The drilling tool can have therefore several implementations, including a rotating drilling tool, i.e. a drilling tool rotating around its own longitudinal axis.

As can been seen in Fig. 1, 3 and 4 and according to a preferred embodiment, said rotary drilling 42 unit includes a double-head spindle 46 whose two ends are equipped with one drilling tool 44, said drilling tools 44 being shown as drill-bits.

As can been seen in Fig. 1, 3 and 4 and according to another preferred embodiment, said rotary drilling 42 unit comprises a stop element 48 placed along the drill bit (more generally the drilling tool 44), behind the tip of the drill bit, at a distance from the tip of the drill bit corresponding to the maximum drilling depth. This stop element 48 can come into contact with the outer face 104 of the pipe 100, depending from the initial distance (height along vertical Z-Z' direction in Fig.1) adjustment between the pipe 100 and the pipe drilling device 40 and any possible variation of such distance (height along vertical Z-Z' direction in Fig.1).

In order to perform a clean and quite circular hole, the rotation speed of the rotary drilling unit 42 around the axis of rotation Y-Y' is preferably such that as the linear speed of the drilling tool 44 along its arc-shaped path 50 (or circular path) is sensibly the same as the linear speed of the pipe 100 circulating along said circulation direction X-X' in the pipe drilling device 40 when said drilling tool 44 is in the closest position from the pipe 100, i.e. in contact with the pipe 100, which means in the lowest position for the embodiment shown in Fig 1 to 4.

According to a preferred provision of the drilling method according to the invention, a drilling sequence (using or not the pipe drilling device 40 or any previously described alternative) is combined with a dripper detection sequence, implemented before said drilling sequence for making a given hole, said dripper detection sequence using said described dripper detection device 20 for detecting the dripper 120 corresponding to said given hole, according to the following steps:
- emitting a laser beam directed to the pipe outer face 104 location where drippers 120 are present at regular intervals,
- receiving and analysing the laser beam 27 reflected on the pipe outer face 104 to provide a transformed reflected signal which contain information about the passage of each dripper 120 facing said laser detection unit 22.

Also, according to a preferred provision of the drilling method according to the invention, said transformed reflected signal is used (arrow C) for controlling the rotation of said rotary drilling unit 42 in order to drill a hole 108 through the pipe wall 102 for each dripper 120 at a predetermined location corresponding to the water outlet of said dripper 120. This predetermined location of the pipe facing said drilling device 40 derives from said transformed reflected signal which is used by said drilling control unit 28 to calculate from the information contained in the transformed reflected signal, the moment for performing the drilling at the right place of the pipe wall 102 and adapt in consequence the rotary speed of the rotary drilling unit 42 in function of the current angular position, rotation speed and direction of rotation of the rotary drilling unit 42. The rotary drilling unit 42 is moveable according to a rotation motion where the angular velocity (the rotary speed) of the rotary drilling unit 42 is varying according to the velocity of the tube 100 during the drilling phase and to the spacing of the drippers 120 and the velocity of the tube in-between two drilling phases.

The present invention also concerns a method for drilling an irrigation pipe wherein the detection of the drippers is performed to any of previously described dripper detection method, wherein it further comprises using said transformed reflected signal for controlling the drilling sequence of a pipe drilling device placed downstream said dripper detection device and comprising any drilling means able to drill a hole on the pipe wall for each dripper at a predetermined location corresponding to the water outlet of said dripper. Here, it is to be understood that the pipe drilling device can use a drilling unit which is not a rotary drilling unit.

According to a preferred provision of the drilling method according to the invention, a drilling sequence is combined with a dripper detection sequence (using or not the dripper detection device 20 or any previously described alternative) implemented before said drilling sequence for making a given hole 108, said drilling sequence having the following steps:
- providing a rotary drilling unit 42 equipped with at least one drilling tool 44, and being distant from the pipe 100 so that said drilling tool 44 is able to drill a hole 108 in the pipe wall 102 at a location of a dripper 120 when the angular position of the drilling tool 44 around said axis of rotation (Y-Y') corresponds to the closest position from the pipe 100,
- making said rotary drilling unit 42 to rotate around an axis of rotation (Y-Y') which is orthogonal to said circulation direction (X-X') and to said dripper orientation (Z-Z'),
- drilling holes 108 in the pipe wall at each location of a dripper 120 when the angular position of the drilling tool 44 around said axis of rotation (Y-Y') is the closest from the pipe 100, which corresponds preferably to the lowest position of the drilling tool 44. Here, it is to be understood that the pipe drilling device can use a detection unit which is not a laser detection unit.

In the illustrated embodiment the pipe circulation direction X-X', the axis of rotation Y-Y' of the rotary drilling and the dripper orientation Z-Z' are orthogonal taken as pairs and form together a 3D Cartesian rectangular coordinate system but other geometrical arrangements are possible.

In said previously mentioned method for drilling an irrigation pipe, drilling step is preferably implemented with said rotary drilling unit 42 rotating around said rotation axis Y,Y' according to a unique rotation direction. As an alternative, said rotary drilling unit 42 is rotating around said rotation axis Y,Y' according to a motion alternatively clockwise and anti-clockwise, in which the direction of rotation changes after the drilling of each hole 108 in the pipe wall 102.

A possible embodiment for a rotary drilling unit 42 is shown in more details in Fig. 3 and 4.

### Reference numbers used on the figures

- 10: Irrigation pipe drilling system
- 100: irrigation pipe (100)
- 100a: pipe section facing said laser detection unit
- 100b: pipe section facing said rotary drilling unit
- 102: pipe wall
- 104: pipe outer face
- 106: Deformation of the pipe outer face
- 108: Hole drilled in the irrigation pipe wall
- 110: support element
- 120: Dripper
- 120a: dripper currently detected
- 122: labyrinth
- 124: Collecting chamber
- 126: water outlet
- 20: Dripper detection device
- 22: laser detection unit
- 24: laser source
- 25: Emitted laser beam
- 26: laser signal receiver
- 27: reflected laser beam
- 28: drilling control unit
- 30: stabilizing unit
- 32: Roller
- 40: pipe drilling device
- 42: rotary drilling unit
- 44: drilling tool (drill bit)
- 46: double-head spindle
- 48: stop element
- 50: arc-shaped path (or circular path)

## Claims

1. Pipe drilling device (40) for an irrigation pipe manufacturing system comprising a continuous pipe feeder capable of making a pipe (100) equipped with drippers (120) within the pipe and having a water outlet (126), said pipe (100) circulating along a predetermined circulation direction (X-X') while keeping the drippers' water outlet (126) in a predetermined dripper orientation (Z-Z'), **characterised in that** said pipe drilling device (40) includes a rotary drilling unit (42) which rotates around an axis of rotation (Y-Y') which is orthogonal to said circulation direction (X-X') and to said dripper orientation (Z-Z'), said rotary drilling unit (42) being equipped with at least one drilling tool (44) performing a rotating motion around its own longitudinal axis and being distant from the pipe (100) so that said drilling tool (44) is able to drill a hole in the pipe wall (102) at a location of a dripper (120) when the angular position of the drilling tool (44) corresponds to the closest position from the pipe (100).

2. Pipe drilling device (40) according to claim 1, wherein said drilling tool (44) is a drill bit.

3. Pipe drilling device (40) according to claim 1, wherein said drilling tool (44) is a punch die elastically pushed towards said pipe wall (102) when the rotative drilling unit arrives at a radial position turned towards said pipe (100).

4. Pipe drilling device (40) according to any of preceding claims, wherein said rotary drilling unit (42) includes a double-head spindle (46) whose two ends are equipped with one drilling tool (44).

5. Pipe drilling device (40) according to any of preceding claims, wherein said rotary drilling unit (42) rotates around said rotation axis (Y,Y') according to a unique rotation direction.

6. Pipe drilling device (40) according to any of claims 1 to 4, wherein said rotary drilling unit (42) rotates around said rotation axis (Y,Y') according to a motion alternatively clockwise and anti-clockwise, in which the direction of rotation changes after the drilling of each hole in the pipe (100).

7. Pipe drilling device (40) according to preceding claim, wherein the rotation speed of the rotary drilling unit (42) around said axis of rotation (Y-Y') is decelerating before each change of rotation direction and accelerating after each change of rotation direction.

8. Pipe drilling device (40) according to any of preceding claims, wherein said rotary drilling unit (42) is further equipped with a stop element (48) against which said pipe (100) comes into contact in order to limit the drilling depth of the drilling tool (44).

9. Pipe drilling device (40) according to any of preceding claims, wherein the rotation speed of the rotary drilling unit (42) around said axis of rotation (Y-Y') is such that the linear speed of the drilling tool (44) along its circular path is sensibly the same as the linear speed of the pipe (100) circulating along said circulation direction (X-X') in the pipe drilling device (40) when said drilling tool (44) is in said closest position from the pipe (100).

10. Irrigation pipe drilling system comprising a pipe drilling device (40) according to any of the preceding claims and a dripper detection device (20) placed upstream said pipe drilling device (40) and comprising detection means able to detect each dripper location so that said pipe drilling device (40) is able to drill a hole through the pipe wall (102) at a predetermined location corresponding to the water outlet (126) of said dripper.

11. System according to preceding claim, wherein said dripper detection device (20) including a laser detection unit (22) with a laser source (24) emitting a laser beam (25) directed to the pipe outer face (104) location where drippers (120) are present at regular intervals, and a laser signal receiver (26) which receives and analyses the laser beam (27) reflected on the pipe outer face (104) to provide a transformed reflected signal which contain information about the passage of each dripper (120) facing said laser detection unit (22).

12. System according to claim 10 or 11 wherein said dripper detection device (20) further includes a stabilizing unit (30) placed upstream and/or downstream of the laser detection unit (22) for having a determined and constant angular orientation and a determined and constant distance from said laser detection unit (22) of the pipe section facing said laser detection unit (22).

13. Method for drilling an irrigation pipe equipped with drippers (120) having a water outlet (126), said pipe (100) continuously running along an irrigation pipe manufacturing system, comprising
- keeping said irrigation pipe (100) circulating along a predetermined circulation direction (X-X') while keeping the drippers' water outlet (126) in a predetermined dripper orientation (Z-Z'),
- providing a rotary drilling unit (42) equipped with at least one drilling tool (44) performing a rotating motion around its own longitudinal axis, and being distant from the pipe (100) so that said drilling tool (44) is able to drill a hole in the pipe wall (102) at a location of a dripper (120) when the angular position of the drilling tool (44) corresponds to the closest position from the pipe (100),
- making said rotary drilling unit (42) to rotate around an axis of rotation (Y-Y') which is orthogonal to said circulation direction (X-X') and to said dripper orientation (Z-Z'),
- drilling holes in the pipe wall (102) at each location of a dripper (120) when the angular position of the drilling tool (44) is the closest from the pipe (100).

14. Method according to preceding claim, wherein said rotary drilling unit (42) further includes a double-head spindle (46) whose two ends are equipped with one drillings tool and wherein said drilling step is implemented by using alternatively each of said two drilling tools (44).

15. Method according to claim 14, wherein said drilling step is implemented with said rotary drilling unit (42) rotating around said rotation axis (Y,Y') according to a unique rotation direction.

16. Method according to claim 14, wherein said drilling step is implemented with said rotary drilling unit (42) rotating around said rotation axis (Y,Y') according to a motion alternatively clockwise and anti-clockwise, in which the direction of rotation changes after the drilling of each hole in the pipe (100).

17. Method according to any of claim 13 to 16, wherein it also comprises a dripper detection sequence according to the following steps:
- emitting a laser beam (25) directed to the pipe outer face (104) location where drippers (120) are present at regular intervals,
- receiving and analysing the laser beam (27) reflected on the pipe outer face (104) to provide a transformed reflected signal which contain information about the passage of each dripper (120) facing said laser detection unit (22).

18. Method according to any of claim 13 to 17, further using said transformed reflected signal for controlling the rotation of said rotary drilling unit (42) in order to drill a hole on the pipe wall (102) for each dripper (120) at a predetermined location corresponding to the water outlet (126) of said dripper.

## Patentansprüche

1. Rohrbohrgerät (40) für ein Bewässerungsrohrfertigungssystem aufweisend einen kontinuierlichen Rohrzuführer ausgebildet ein Rohr (100), das mit Tropfvorrichtungen (120) mit einen Wasserauslass (126) in dem Rohr ausgestattet ist, zu machen, wobei das Rohr (100) entlang einer vorbestimmten Zirkulationsrichtung (X-X') zirkuliert während die Tropfvorrichtungen (120) in einer bestimmten Tropforientierung (Z-Z') behalten werden, **dadurch gekennzeichnet, dass** das Rohrbohrgerät (40) eine rotierende Bohreinheit (42) aufweist, die um eine Rotationsachse (Y-Y') rotiert, die rechtwinkelig zu der Zirkulationsrichtung (X-X') und der Tropforientierung (Z-Z') ist, wobei die rotierende Bohreinheit (42) mit mindestens einem Bohrwerkzeug (44) ausgestattet ist, das eine rotierende Bewegung um seine eigene Längsachse durchführt und von dem Rohr (100) beabstandet ist, so dass das Bohrwerkzeug (44) ausgebildet ist ein Loch in die Rohrwand (102) an einer Position einer Tropfvorrichtung (120) bohrt, wenn die Winkelposition des Bohrwerkzeugs (44) der nähesten Position von dem Rohr (100) entspricht.

2. Rohrbohrgerät (40) nach Anspruch 1, wobei das Rohrwerkzeug (44) ein Bohreinsatz ist.

3. Rohrbohrgerät (40) nach Anspruch 1, wobei das Rohrwerkzeug (44) ein Pressformstempel ist, der elastisch gegen die Rohrwand (102) gedrückt wird, wenn die Bohreinheit an einer radialen zu dem Rohr (100) hingewandten Position ankommt.

4. Rohrbohrgerät (40) nach einem der vorigen Ansprüche, wobei die rotierende Bohreinheit (42) eine doppelköpfige Spindel (46) aufweist, deren zwei Enden mit einem Bohrwerkzeug (44) ausgestattet sind.

5. Rohrbohrgerät (40) nach einem der vorigen Ansprüche, wobei die rotierende Bohreinheit (42) um die Rotationsachse (Y, Y') entsprechend der einzigen Rotationsrichtung rotiert.

6. Rohrbohrgerät (40) nach einem der Ansprüche 1 bis 4, wobei die rotierende Bohreinheit (42) um die Rotationsachse (Y, Y') entsprechend einer Bewegung im Uhrzeigersinn oder alternativ gegen den Uhrzeigersinn rotiert, in der die Rotationsrichtung nach dem Bohren jedes Lochs in das Rohr (100) wechselt.

7. Rohrbohrgerät (40) nach dem vorigen Anspruch, wobei die Rotationsgeschwindigkeit der rotierenden Bohreinheit (42) um die Rotationsachse (Y-Y') vor jedem Rotationsrichtungswechsel abbremst und nach jedem Rotationsrichtungswechsel beschleunigt.

8. Rohrbohrgerät (40) nach einem der vorigen Ansprüche, wobei die rotierende Bohreinheit (42) weiter mit einem Stoppelement (48) ausgestattet ist, gegen das Rohr (100) in Kontakt kommt, um die Bohrtiefe des Bohrwerkzeugs (44) zu begrenzen.

9. Rohrbohrgerät (40) nach einem der vorigen Ansprüche, wobei die Rotationsgeschwindigkeit der rotierenden Bohreinheit (42) um die Rotationsachse (Y-Y') so ist, dass die lineare Geschwindigkeit des Bohrwerkzeugs (44) entlang seinem zirkularen Pfad ist grundsätzlich die gleiche Geschwindigkeit wie die lineare Geschwindigkeit des um die Zirkulierungsrichtung (X-X') zirkulierenden Rohrs in dem Rohrbohrgerät (40) ist, wen das Bohrwerkzeug (44) in der nähesten Position von dem Rohr (100) ist.

10. Bewässerungsrohrbohrsystem mit einem Rohrbohrgerät (40) nach einem der vorigen Ansprüche und ein Tropfvorrichtungsdetektionsgerät (20), das stromaufwärts des Rohrbohrgeräts (40) angeordnet ist und ein Detektionsmittel aufweist, das ausgebildet ist, jede Tropfvorrichtungsposition zu detektieren, so dass das Rohrbohrgerät (40) ausgebildet ist, an einer dem Wasserauslasses der Tropfvorrichtung entsprechenden vorbestimmten Position ein Loch durch die Rohrwand (102) zu bohren.

11. System nach dem vorigen Anspruch, wobei das Tropfvorrichtungsdetetionsgerät (20) eine Lasereinheit (22) mit einer Laserquelle (24), die einen auf den Ort der äußeren Fläche (104) des Rohrs gerichteten Laserstrahl (25) aussendet, wo sich die Tropfvorrichtungen (120) in regelmässigen Intervallen befinden, und einen Lasersignalempfänger (26), der den von der äusseren Fläche (104) des Rohrs reflektierten Laserstrahl (27) empfängt und analysiert, um ein transformiertes reflektiertes Signal bereitzustellen, das Informationen über den Durchgang einer jeden zu der Laserdetektionseinheit (20) gerichtete Tropfvorrichtung (120) enthält, aufweist.

12. System nach Anspruch 10 oder 11, wobei das Tropfvorrichtungsdetektionsgerät (20) weiter eine Stabilisierungseinheit (30) aufweist, die stromaufwärts und/oder stromabwärts der Laserdetektionseinheit (30) angeordnet ist, um eine bestimmte und konstante Winkelorientierung und eine bestimmte und konstante Entfernung von der Laserdetektionseinheit (22) zu dem die Laserdetektionseinheit (22) gerichteten Rohrbereich zu haben.

13. Verfahren zum Bohren eines mit Tropfvorrichtungen (120) mit einem Wasserauslass (126) ausgestatteten Bewässerungsrohrs, wobei das Rohr (100) entlang eines Bewässerungsrohrfertigungssystem kontinuierlichen läuft, aufweisend
- das Rohr (100) entlang einer vorbestimmten Zirkulationsrichtung (X-X') zirkulieren zu lassen, während der Wasserauslass (126) in eine bestimmten Tropforientierung (Z-Z') behalten werden,
- Bereitstellen einer rotierende Bohreinheit (42), die mit mindestens einem Bohrwerkzeug (44) ausgestattet ist, das eine rotierende Bewegung um seine eigene Längsachse durchführt und von dem Rohr (100) beabstandet ist, so dass das Bohrwerkzeug (44) ausgebildet ist ein Loch in die Rohrwand (102) an einer Position einer Tropfvorrichtung (120) bohrt, wenn die Winkelposition des Bohrwerkzeugs (44) der nähesten Position von dem Rohr (100) entspricht,
- Veranlassen, dass die rotierenden Bohreinheit (42) sich um eine Rotationsachse (Y-Y') rotiert, die rechtwinkelig zu der Zirkulationsrichtung (X-X') und der Tropforientierung (Z-Z') ist,
- Bohren der Löcher in der Rohrwand (102) an jeder Position einer Tropfvorrichtung (120), wenn die Winkelposition des Bohrwerkzeugs (44) am nähesten zu dem Rohr (100) ist.

14. Verfahren nach dem vorigen Anspruch, wobei die rotierende Bohreinheit (42) weitere Rohrbohrgerät (40) nach einem der vorigen Ansprüche, wobei die rotierende Bohreinheit (42) eine doppelköpfige Spindel (46) aufweist, deren zwei Enden mit einem Bohrwerkzeug (44) ausgestattet sind, und wobei der Bohrschritt durch die alternative Benutzung jedes der beiden Bohrwerkzeuge (44) implementiert wird.

15. Verfahren nach Anspruch 14, wobei der Bohrschritt mit der Rotation der rotierenden Bohreinheit (42) um die Rotationsachse (Y, Y') entsprechend der einzigen Rotationsrichtung implementiert ist.

16. Verfahren nach Anspruch 14, wobei der Bohrschritt mit der Rotation der rotierenden Bohreinheit (42) um die Rotationsachse (Y, Y') entsprechend einer Bewegung im Uhrzeigersinn oder alternativ gegen den Uhrzeigersinn rotiert, in der die Rotationsrichtung nach dem Bohren jedes Lochs in das Rohr (100) wechselt.

17. Verfahren nach einem der Ansprüche 13 bis 16, wobei es auch eine Tropfvorrichtungdetektionssequenz mit den folgenden Schritten:
- Aussenden eines auf den Ort der äußeren Fläche (104) des Rohrs gerichteten Laserstrahls (25), wo sich die Tropfvorrichtungen (120) in regelmäßigen Intervallen befinden,
- Empfangen und Analysieren des von der äußeren Fläche (104) des Rohrs reflektierten Laserstrahl (27), um ein transformiertes reflektiertes Signal bereitzustellen, das Informationen über den Durchgang einer jeden zu der Laserdetektionseinheit (20) gerichtete Tropfvorrichtung (120) enthält.

18. Verfahren nach einem der Ansprüche 13 bis 17, weiter verwendend das transformierte reflektierte Signal zum Steuern der Rotation der rotierenden Bohreinheit (42), um für jede Tropfvorrichtung an einer dem Wasserauslass (126) der Tropfvorrichtung entsprechenden vorbestimmten Position ein Loch in die Rohrwand (102) zu bohren.

## Revendications

1. Dispositif de perçage de tuyau (40) pour un système de fabrication de tuyau d'irrigation comprenant un distributeur de tuyau en continu capable de faire un tuyau (100) équipé de goutteurs (120) dans le tuyau et ayant une sortie d'eau (126), ledit tuyau (100) circulant le long d'une direction de circulation prédéterminée (X-X') tout en gardant la sortie d'eau des goutteurs (126) dans une orientation de goutteur prédéterminée (Z-Z'), **caractérisé en ce que** ledit dispositif de perçage de tuyau (40) comprend une unité de perçage rotative (42) qui tourne autour d'un axe de rotation (Y-Y') qui est orthogonal à ladite direction de circulation (X-X') et à ladite orientation de goutteur (Z-Z'), ladite unité de perçage rotative (42) étant munie d'au moins un outil de perçage (44) effectuant un mouvement de rotation autour de son propre axe longitudinal et étant éloigné du tuyau (100) de sorte que ledit outil de perçage (44) est capable de percer un trou dans la paroi du tuyau (102) à un emplacement d'un goutteur (120) lorsque la position angulaire de l'outil de perçage (44) correspond à la plus proche position du tuyau (100).

2. Dispositif de perçage de tuyau (40) selon la revendication 1, dans lequel ledit outil de perçage (44) est une mèche.

3. Dispositif de perçage de tuyau (40) selon la revendication 1, dans lequel ledit outil de perçage (44) est une matrice de poinçon élastiquement poussée vers la paroi dudit tuyau (102) lorsque l'unité de perçage rotative arrive à une position radiale tournée vers ledit tuyau (100).

4. Dispositif de perçage de tuyau (40) selon l'une quelconque des revendications précédentes, dans laquelle ladite unité de perçage rotative (42) comprend une broche double-tête (46), dont les deux extrémités sont équipées d'un outil de perçage (44).

5. Dispositif de perçage de tuyau (40) selon l'une quelconque des revendications précédentes, dans lequel ladite unité de perçage rotative (42) tourne autour dudit axe de rotation (Y, Y') selon un sens de rotation unique.

6. Dispositif de perçage de tuyau (40) selon l'une quelconque des revendications 1 à 4, dans lequel ladite unité de perçage rotative (42) tourne autour dudit axe de rotation (Y, Y') selon un mouvement alternativement dans le sens horaire et anti-horaire, dans lequel le sens de rotation change après le perçage de chaque trou dans le tuyau (100).

7. Dispositif de perçage de tuyau (40) selon la revendication précédente, dans lequel la vitesse de rotation de l'unité de perçage rotative (42) autour dudit axe de rotation (Y-Y') est en décélération avant chaque changement de sens de rotation et en accélération après chaque changement de sens de rotation.

8. Dispositif de perçage de tuyau (40) selon l'une quelconque des revendications précédentes, dans laquelle ladite unité de perçage rotative (42) est en outre équipée d'un élément de butée (48) contre lequel ledit tuyau (100) entre en contact afin de limiter la profondeur de perçage de l'outil de perçage (44).

9. Dispositif de perçage de tuyau (40) selon l'une quelconque des revendications précédentes, dans lequel la vitesse de rotation de l'unité de perçage rotative (42) autour dudit axe de rotation (Y-Y') est telle que la vitesse linéaire de l'outil de perçage (44) le long de sa trajectoire circulaire est sensiblement la même que la vitesse linéaire du tuyau (100) circulant le long de ladite direction de circulation (X-X') dans le dispositif de perçage de tuyau (40) quand ledit outil de perçage (4a) est à ladite position la plus proche du tuyau (100).

10. Système de perçage de tuyau d'irrigation comprenant un dispositif de perçage de tuyau (40) selon l'une quelconque des revendications précédentes et un dispositif de détection de goutteur (20) placé en amont dudit dispositif de perçage de tuyau (40) et comprenant des moyens de détection capable de détecter chaque emplacement de goutteur de sorte que ledit dispositif de perçage de tuyau (40) est capable de percer un trou dans la paroi du tuyau (102) à un endroit prédéterminé correspondant à la sortie d'eau (126) dudit goutteur.

11. Système selon la revendication précédente, dans lequel ledit dispositif de détection de goutteur (20) comprend une unité de détection laser (22) avec une source laser (24) émettant un faisceau laser (25) dirigé sur la face externe du tuyau (104) endroit où les goutteurs (120) sont présents à intervalles réguliers, et un récepteur de signal laser (26) qui reçoit et analyse le faisceau laser (27) réfléchi sur la face externe du tuyau (104) pour fournir un signal réfléchi transformé qui contient des informations sur le passage de chaque goutteur (120) faisant face à ladite unité de détection laser (22).

12. système selon la revendication 10 ou 11, dans lequel ledit dispositif de détection de goutteur (20) comprend en outre une unité de stabilisation (30) placée en amont et/ou en aval de l'unité de détection laser (22) pour avoir une orientation angulaire déterminée et constante et une distance déterminée et constante par rapport à ladite unité de détection laser (22) du tronçon du tuyau faisant face à ladite unité de détection laser (22).

13. Méthode pour percer un tuyau d'irrigation équipé de goutteurs (120) ayant une sortie d'eau (126), ledit tuyau (100) avançant en continu le long d'un système de fabrication de tuyau d'irrigation, comprenant :
- le maintien dudit tuyau d'irrigation (100) circulant le long d'une direction de circulation prédéterminée (X-X') tout en gardant la sortie d'eau des goutteurs (126) selon une orientation de goutteur prédéterminée (Z-Z'),
- la fourniture d'une unité de perçage rotative (42) équipée d'au moins un outil de perçage (44) effectuant un mouvement de rotation autour de son propre axe longitudinal, et étant distant du tuyau (100) de sorte que ledit outil de perçage (44) est capable de percer un trou dans la paroi du tuyau (102) à l'emplacement d'un goutteur (120) lorsque la position angulaire de l'outil de perçage (44) correspond à la position la plus proche du tuyau (100),
- obtention de la rotation de ladite unité de perçage rotative (42) autour d'un axe de rotation (Y-Y') qui est orthogonal à ladite direction de circulation (X-X') et à ladite orientation de goutteur (Z-Z'),
- le perçage des trous dans la paroi du tube (102) à chaque emplacement d'un goutteur (120), lorsque la position angulaire de l'outil de perçage (44) est le plus proche du tuyau (100).

14. Méthode selon la revendication qui précède, dans laquelle ladite unité de perçage rotative (42) comprend en outre une broche double-tête (46) dont les deux extrémités sont équipées d'un outil de perçage et dans lequel ladite étape de perçage est implémentée en utilisant alternativement chacun desdits deux outils de perçage (44).

15. Méthode selon la revendication 14, dans laquelle ladite étape de perçage est implémentée avec ladite unité de perçage rotative (42) tournant autour dudit axe de rotation (Y, Y') selon un sens de rotation unique.

16. Méthode selon la revendication 14, dans laquelle ladite étape de perçage est implémentée avec ladite unité de perçage rotative (42) tournant autour dudit rotation axe (Y, Y') selon un mouvement alternativement dans le sens horaire et anti-horaire, dans lequel le sens de rotation change après le perçage de chaque trou dans le tuyau (100).

17. Méthode selon l'une des revendication 13 à 16, dans laquelle elle comprend également une séquence de détection de goutteur selon les étapes suivantes :
- émission d'un faisceau laser (25) dirigé vers l'emplacement de la face extérieure (104) de tuyau qui présente des goutteurs (120) à intervalles réguliers,
- réception et analyse du faisceau laser (27) réfléchi sur la face extérieure du tuyau (104) pour fournir un signal réfléchi transformé qui contient des informations sur le passage de chaque goutteur (120) faisant face à ladite unité de détection laser (22).

18. Méthode selon l'une des revendication 13 à 17, utilisant en outre ledit signal réfléchi transformé pour contrôler la rotation de ladite unité de perçage rotative (42) afin de percer un trou sur la paroi du tube (102) pour chaque goutteur (120) à un endroit prédéterminé correspondant à la sortie d'eau (126) dudit goutteur.
